# EUROPÄISCHE PATENTSCHRIFT

(11) **EP 0 711 055 B1**
(45) Veröffentlichungstag und Bekanntmachung des Hinweises auf die Patenterteilung: **26.03.1997**
(21) Anmeldenummer: 95810683.3
(22) Anmeldetag: 31.10.1995
(51) Int. Cl.: H04L 12/56, H04L 12/26

(54) **Verfahren und Vorrichtung zur Messung charakteristischer Grössen eines Stroms von Datenpaketen fester Länge in einem digitalen Übertragungssystem**
Method and apparatus for measuring characteristic parameters of a flow of fixed length data packets in a digital transmission system
Procédé et appareil pour la mesure de paramètres caractéristiques d'un flux de paquets de données de longueur fixe dans un système digital de transmission

(30) Priorität: 13.06.1995 CH 1728/95; 03.11.1994 CH 3280/94
(43) Veröffentlichungstag der Anmeldung: 08.05.1996
(73) Patentinhaber: ALCATEL ALSTHOM COMPAGNIE GENERALE D'ELECTRICITE, 75008 Paris (FR)
(72) Erfinder: Stock, Thomas, Dr., CH-8003 Zürich (CH); Grünenfelder, Reto, Dr., CH-8305 Dietikon (CH)
(74) Vertreter: Ulrich, Jürg

(56) Entgegenhaltungen:
- EP-A- 0 481 507
- INTERNATIONAL ZURICH SEMINAR ON DIGITAL COMMUNICATIONS, März 1990 SWITZERLAND, Seiten 131-144, F. DENISSEN ET AL. 'The policing function in ATM networks'
- PATENT ABSTRACTS OF JAPAN vol. 18 no. 535 (E-1615) [6875] ,12.Oktober 1994 & JP-A-06 188900 (TOSHIBA CORP.) 8.Juli 1994,

## Beschreibung

Die Erfindung liegt auf dem Gebiet der Breitbanddatenübermittlung und betrifft ein Verfahren zur Messung charakteristischer Grössen eines Stroms von Datenpaketen fester Länge, die Anwendung des Verfahrens zur Kontrolle des Stroms auf die Einhaltung individuell vereinbarter Verkehrsparameter sowie die Vorrichtungen zur Durchführung der Verfahren.

Die Uebertragung von Informationen irgendwelcher Art geschieht heute in vielen Anwendungsbereichen mittels digitaler Dateneinheiten. Die Form der Dateneinheiten ist dem Uebertragunsgmedium angepasst definiert, oft auch normiert. Beispiele dafür sind die Zellen des asynchronen Uebermittlungsverfahrens (ATM - Asynchronous Transfer Mode) oder die Rahmen eines regionalen Netzes (MAN - Metropolitan Area Network) oder jene gemäss dem "Frame Relay"-Protokoll. Die Uebertragungsmedien sind so konzipiert, dass die Informationen mehrerer Quellen gleichzeitig dieselbe physische Uebertragungsvorrichtung benützen können. In einem digitalen Uebertragungssystem verkehren die angepassten Dateneinheiten oft über weite Teile als Strom von Datenpaketen. Ein Datenpaket ist eine grössere Menge von Datenbits, die nach einem vorgegebenen Verpackungsschema zusammengefügt sind. Ein Datenpaket ist in der Regel mit einem Paketkopf versehen, der (unter anderem) Adressierungs- oder Leitwegdaten für die Datenübertragung enthält. In einem auf ATM basierenden Telekommunikationsnetz sind dies beispielsweise Leitwegangaben für eine paketorientierte Vermittlung über virtuelle Verbindungen. Je nach Umfeld (Art und Weise der Datenübermittlung, Netz, Dienste, Prozeduren) können Datenpakete in Grenzen variable oder eine gewisse feste Länge aufweisen. Kürzere Pakete fester Länge werden gelegentlich als Zellen bezeichnet, insbesondere in Netzen mit einem Datenverkehr nach dem asynchronen Uebermittlungsverfahren (ATM). Im folgenden wird für ein Datenpaket fester Länge der Begriff Zelle gebraucht, ohne jedoch auf ATM-Zellen beschränkt zu sein; so können insbesondere die Länge beliebig festgelegt und die Adressierungs- oder Leitwegangaben dem Umfeld angepasst sein - dafür wird der Begriff individuelle Verbindung benützt.

Um bestimmte Uebertragungsvorrichtungen wie Leitungen, Vermittlungseinheiten, Multiplexer usw. möglichst gut ausnützen zu können, aber einerseits ohne über Gebühr Verstopfungen und damit verbunden Zellverluste in Kauf nehmen zu müssen und ohne andererseits eine explizite Flusskontrolle einzuführen, werden üblicherweise mit den Benützern Vereinbarungen über die Verkehrsparameter getroffen. Damit derartige Vereinbarungen eingehalten werden, muss sendeseitig der Zellenstrom entsprechend angepasst werden, was mit Hilfe sogenannter "Shaper" passiert. Empfangsseitig (am Netzzugang) muss er überprüft und nötigenfalls bereinigt werden können, wofür sogenannte "Policer" eingesetzt werden, die Zellen markieren oder ausscheiden. Eine Parameterüberwachung, unter Umständen mit entsprechenden Folgemassnahmen, insbesondere das Verwerfen von Zellen, kann aber auch an bestimmten Netzelementen innerhalb des Netzes sinnvoll oder notwendig sein, wenn es zum Beispiel darum geht, eine Vermittlungseinheit vor Ueberlast zu schützen.

Für eine Parameterüberwachung müssen die zu überwachenden Parameter definiert und geeignete Mittel vorhanden sein, um über deren Einhaltung entscheiden zu können. Für ATM-basierende Systeme gehört der "Generic Cell Rate monitoring Algorithm (GCRA) zum Stand der Technik, besser bekannt unter den Ausführungsformen "Virtual Scheduling Algorithm" (VSA) und "Continuous-State Leaky Bucket Algorithm". Als Parameter benützt er den Kehrwert der maximalen Zellenrate, das "Peak Emission Interval" T, und die Zellenverzögerungsschwankungstoleranz T. Ihm haftet der Nachteil an, nicht auf einem Messintervall konstanter Grösse zu beruhen. Er hat ein virtuell unendliches Gedächtnis, das heisst kurzzeitige Höchstbelastungen füllen den virtuellen Speicher, so dass bei viel später wieder auftretender hoher Belastung zu rasch auf Ueberlast entschieden wird, sofern dazwischen nicht eine Phase von Schwachlast vorlag. Andererseits kann es passieren, dass über eine gewisse Zeit hinweg im Mittel mehr Zellen akzeptiert werden, als es dem "Peak Emission Interval" der Vereinbarung entspricht. Es ist daher auch nicht möglich, einen nach dem GCRA arbeitenden Entscheider durch einfaches Zuschalten eines weiteren Entscheiders zu überprüfen. Einen Ueberblick über weitere Entscheidungsmechanismen im Zusammenhang mit der Kontrolle des Zellenstroms in ATM-Netzen gibt der Artikel von Rathgeb, E. P.: "Modeling and Performance Comparision of Policing Mechnisms for ATM Networks"; IEEE journal on selected areas in communications, vol. 9, no. 3, April 1991, p. 325 ff oder jener von F. Denissen et al.: "The policing function in ATM networks"; International Zurich Seminar on Digital Communications, 5.-8. März 1990, ETH Zürich, CH, Seiten 131-144.

Ein geeignetes Mittel, um über die Einhaltung der Parameter entscheiden zu können, ist die Messung charakteristischer Grössen im Zellenstrom, insbesondere die Rate der zu einer bestimmten individuellen Verbindung gehörenden Zellen, das heisst die Anzahl Zellen pro Zeiteinheit, und daraus abgeleitete Grössen, wie etwa Mittelwerte, sowie die Schwankungen derselben. Eine Entscheidung darüber, ob eine neu ankommende Zelle im Strom der getroffenen Vereinbarung über die entsprechende individuelle Verbindung entspricht, lässt sich dann aufgrund der Messwerte fällen. Die individuelle Messung in Zellenströmen, insbesondere bei Breitbandübertragungen von bis über 600 Mbit/s, bietet allerdings erhebliche Schwierigkeiten. Veröffentlichungen zu diesem Thema vermitteln den Eindruck, eine echte Messung lasse sich wegen des zu hohen Aufwands kaum oder höchstens mit ungenügender Flexibilität realisieren.

Es besteht daher die Aufgabe, in einem digitalen Uebertragungssystem mit hoher Durchsatzrate der Datenpakete fester Länge, welche verschiedenen individuellen Verbindungen angehören, die Messung charakteristischer Grössen des Paketstroms bezogen auf die jeweilige Verbindung zu ermöglichen.

Diese Aufgabe wird durch ein Verfahren, wie es im Patentanspruch 1 charakterisiert ist, und eine Vorrichtung mit den Merkmalen des Patentanspruchs 7 gelöst.

Das Verfahren basiert darauf, von jeder eintreffenden Zelle die Identifikationsangabe der individuellen Verbindung, der sie zugeordnet ist, samt ihrer relativen Position im Zellenstrom zu speichern. Während einer Zellzykluszeit wird der Speicher abgefragt. Dabei wird selektiert, welche Speicherplätze innerhalb eines definierten Bereichs mit einer bestimmten, einer individuellen Verbindung zugehörigen Identifikationsangabe belegt sind. Das ermittelte Ergebnis als Funktion der selektierten Speicherplätze ergibt zusammen mit der Grösse und der Position des abgefragten Bereichs einen aussagekräftigen Messwert. Die Abfrage wird bevorzugt über eine gewisse Anzahl der zuletzt eingetroffenen Zellen-Identifikationsangaben und für die individuelle Verbindung, der die zuletzt angekommene Zelle angehört, gemacht. Sie ist aber nicht darauf eingeschränkt. Insbesondere können innerhalb derselben Zellzykluszeit mehrere Abfragen gemacht und somit mehrere Messresultate erhalten werden. Im Zellenstrom sind in der Regel immer auch Leerzellen vorhanden, die keiner individuellen Verbindung zugeordnet sind. Auch diese werden aber unter einer Identifikationsangabe gespeichert. Falls die Verteilung der Leerzellen nicht interessiert, kann auf eine Speicherauswertung für die Ersatz- Identifikationsangabe verzichtet werden.

Die einfachste Ausgestaltung des Verfahrens sieht vor, die Anzahl der selektierten Speicherplätze zu ermitteln, das heisst, die Funktion der selektierten Speicherplätze ist eine simple Addition binärer Werte, ungeachtet deren Herkunft. Eine demgegenüber erweiterte Ausgestaltung gewichtet den selektierten Speicherplatz in bestimmter Weise, zum Beispiel exponentiell nach dem Alter des Eintrags, so dass als Ergebnis eine gewichtete Summe resultiert.

Eine bevorzugte Vorrichtung zur Durchführung des erfinderischen Verfahrens sieht als Speicher ein Schieberegister vor, das die Identifikationsangabe im Takt der ankommenden Zellen speichert. Die Identifikationsangabe ist zwecks Reduktion der Wort länge eine lokale und wird in bekannter Weise mit Hilfe eines Identifikationsumsetzers erzeugt, der aus einer ankommenden Zelle die individuelle Verbindung identifiziert. Eine Steuerschaltung bestimmt in jedem Zellzyklus, welcher Speicherbereich nach welcher Angabe abzufragen ist, was mehrfach geschehen kann. Sie steuert einen Selektor, der den Inhalt jeder Schieberegistereinheit auf die Uebereinstimmung mit der vorgegebenen Identifikationsangabe überprüft und bei Uebereinstimmung ein Signalbit setzt. Ein Addierer berechnet die Summe aller selektierter Signalbits. In einer allgemeineren Ausführungsform ist der Addierer ersetzt durch programmierbare Funktionsblöcke.

Die erfinderischen Mittel ermöglichen ein flexibles und rasches Messen der individuellen Charakteristika der Zellenstromanteile. Dank mehrfach möglicher Speicherabfrage innerhalb einer Zellzykluszeit können mehrere Parameter gemessen werden. Die Grösse des Messintervalls ist jederzeit adaptierbar; damit kann das Messfenster für verschiedene individuelle Verbindungen verschieden lang angesetzt werden. Kaskadierte und parallele Ausführungen der Vorrichtung erlauben eine Erhöhung der Flexibilität oder/und der Geschwindigkeit.

Ein Messen der Zellenraten ermöglicht eine quantitative Verwendung derselben, das heisst, es sind nicht nur Ja/Nein-Entscheide möglich. Beispielsweise erlaubt die Messung einem Netzbetreiber ein entprechendes Verrechnen der beanspruchten Leistung. Wozu ein Messergebnis verwendet wird, bleibt letztlich offen. Zweck der Kontrolle eines Zellenstroms ist jedoch in erster Linie, auf diesen in geeigneter Weise einwirken zu können. Die bisher verwendeten Entscheidungsmechanismen basieren auf der ziemlich groben Beurteilung weniger Grössen; dem bekannten GCRA haften dabei die oben erwähnten Mängel an.

Es besteht daher weiter die Aufgabe, in Verfeinerung bisher bekannter Mittel einen Zellenstrom auf die Einhaltung der Vereinbarungen bezüglich der Verkehrsparameter zu kontrollieren und nonkonforme Zellen zu markieren oder auszuscheiden.

Die Ergebnisse der Messung der charakteristischen Grössen ergeben eine gute Entscheidungsgrundlage dafür, in einem Zellenstrom die Einhaltung der Vereinbarungen zu gewährleisten, sei dies bei der Anpassung eines Zellenstroms, dem sogenannten "Shaping", sei es bei der Ueberprüfung und Durchsetzung des Vertrags, dem sogenannten "Policing", zwecks Verhinderung von Verstopfungen. Die Aufgabe wird daher unter Anwendung des erfinderischen Messverfahrens mit den Merkmalen gemäss Patentanspruch 5 bzw. durch Verwendung einer der erfinderischen Vorrichtungen gemäss Patentanspruch 11 gelöst. Dabei wird der Messvorrichtung ein Entscheider nachgeschaltet, der den jeweiligen Messwert in Bezug auf mindestens einen, vom zu beurteilenden Verkehrsparameter abhängigen Wert beurteilt, wobei es möglich ist, mehrere Messwerte gemeinsam zu berücksichtigen.

Das Verfahren arbeitet mit einem Messfenster endlicher Länge und weist daher kein Gedächtnis für die vorausgegangenen Vorgänge auf. Zwei zu unterschiedlichen Zeitpunkten an den Zellenstrom angeschaltete Messvorrichtungen sind daher bereits nach einer Fensterzeit - das sind maximal soviel Zellzykluszeiten, wie Speicherplätze vorhanden sind - im Gleichlauf und ergeben, sofern beide korrekt arbeiten, exakt dasselbe Resultat. Es ist daher möglich, eine zweite Vorrichtung zur Ueberprüfung der ersten einzusetzen, was bei nach dem GCRA arbeitenden Entscheidern in dieser einfachen Weise im allgemeinen nicht möglich ist.

Weitere vorteilhafte Ausführungsformen können den abhängigen Ansprüchen entnommen werden.

Nachstehend wird die Erfindung anhand von Figuren eingehender erläutert, die folgendes zeigen:
- Figur 1: ein Blockschaltbild einer Mess-Vorrichtung;
- Figur 2: das Prinzip der Realisierung eines Addierers;
- Figur 3: die wesentlichen Bestandteile eines Selektors;
- Figur 4: ein Blockschaltbild einer Vorrichtung zur Anwendung des Verfahrens auf die Kontrolle eines Zellenstroms, und
- Figur 5: ein Blockschaltbild einer parallelisierten, verallgemeinerten Anordnung einer Messvorrichtung.
- Figur 6: ein Blockschaltbild einer seriell erweiterten Anordnung einer Messvorrichtung

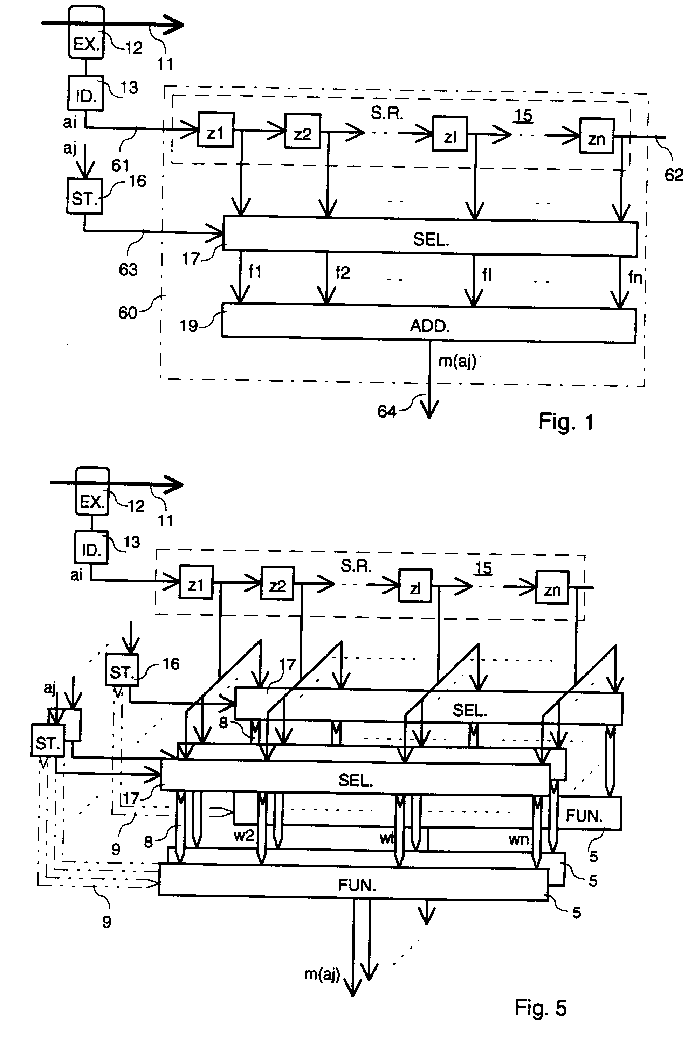

Die Figur 1 zeigt das Blockschaltbild einer Vorrichtung zur Messung charakteristischer Grössen eines Stroms von Datenpaketen fester Länge, der aus Paketen von verschiedenen individuellen Verbindungen zusammengesetzt ist, beispielsweise ATM-Zellen mit verschiedenen VPI/VCI im Kopfteil. Man erkennt einen Zellenstrom 11, an den ein Extraktor (EX.) 12 angehängt ist, der von jeder ankommenden Zelle die Angabe über die individuelle Verbindung i herauskopiert. Ein Identifikationsumsetzer (ID.) 13 wandelt diese Angabe in eine Identifikationsangabe aᵢ. Diese gelangt einerseits an ein Schieberegister (S.R.) 15 und andererseits an eine Steuerschaltung (ST.) 16. Das Schieberegister 15 hat n Stufen (z). Der Inhalt jeder Stufe ist lesbar - jeder Stufenausgang ist mit einem Selektor (SEL.) 17 verbunden, der die nämliche Anzahl n Ausgänge aufweist. Der Selektor 17 seinerseits wird über einen Steuereingang von der Steuerschaltung 16 beeinflusst. Die Selektorausgänge sind auf einen Addierer (ADD.) 19 geführt, dessen Ausgang das Messergebnis liefert.

Im folgenden wird auch das erfinderische Verfahren anhand dieses einen Beispiels einer Vorrichtung erläutert. Diese ist jedoch nicht die einzig mögliche Form. So ist es auch denkbar, an Stelle eines Schieberegisters eine andere Form eines Speichers zu benützen, unter entsprechender Anpassung der Steuerschaltung bzw. Adressierung und des Selektors. Die Bezugnahme auf die Schieberegister-Variante ist für die Ausübung des Verfahrens nicht einschränkend zu verstehen. Ferner kann in einer komplexeren, flexibleren Ausführungsform an Stelle eines einfachen Addierers ein verallgemeinerter Funktionsblock stehen.

Die Identifikationsangabe aᵢ hat nur lokale Bedeutung, benötigt aber weniger Bit als die Angabe der individuellen Verbindung i; letztere umfasst z. B. im Falle eines VPI/VCI einer ATM-Zelle 24 oder 32 Bit, je nachdem ob es sich um eine Benutzer- oder Netzschnittstelle handelt, wogegen für erstere 12 Bit ausreichen dürften - mehr als 4096 Verbindungen müssen kaum je gleichzeitig behandelt werden (Adressenkapazität des Netzes gemäss ITU-Empfehlung). Als Folge dieser Reduktion kann auch die Breite des Schieberegisters und damit die Anzahl w der zu verarbeitenden Bits an den Ausgängen der einzelnen Stufen kleiner gehalten werden.

Bei jeder Zellenankunft wird die Angabe über die individuelle Verbindung i extrahiert, in die lokale Identifikationsangabe aᵢ gewandelt, an die Steuerschaltung 16 und das Schieberegister 15 angelegt und eingelesen, wobei der Inhalt des Schieberegisters um eine Stufe weitertransportiert wird. Die (nicht gezeichnete) Taktung des Schieberegisters entspricht also der Zellenzykluszeit im Zellenstrom.

Unmittelbar nach der Aufdatierung kann die Ermittlung des Messergebnisses beginnen. Hierfür bestimmt die Steuerschaltung 16, für welche Identifikationsangabe aⱼ ein Resultat gefragt ist - üblicherweise wird die Abfrage für die zuletzt eingetroffene Angabe gemacht werden - und welches Fenster betrachtet wird. Die Steuerschaltung 16 gibt also dem Selektor 17 eine Identifikationsangabe aⱼ sowie die untere und obere Grenze des Speicherbereichs an, der daraufhin untersucht werden soll, welche Speicherplätze die Identifikationsangabe aⱼ enthalten. Meist wird die untere Grenze den zuletzt aufdatierten Speicherplatz bezeichnen. Untere und obere Grenze zusammen bilden eine wählbare Anzahl k der n Speichereinträge. Der Selektor 17 macht für jeden Speicherplatz - also jede Schieberegisterstufe (z) - innerhalb des durch die untere und obere Grenze festgelegten Fensters den Vergleich des Inhalts mit der Identifikationsangabe aⱼ. Bei Uebereinstimmung setzt er an dem zum entsprechenden Speicherplatz gehörenden Selektorausgang ein Signalbit. Der nachgeschaltete Addierer 19 bildet die Summe m(aⱼ) dieser Signalbits (f).

Durch eine geeignete Auslegung der Schaltung kann eine derartige Ermittlung sehr schnell erfolgen, so dass sich innerhalb derselben Zellzykluszeit mehrere Messwerte m(aⱼ) feststellen lassen, sei dies für ein anderes Fenster, sei es für eine andere individuelle Verbindung j. In komplexeren Ausführungsformen kann an Stelle des einzigen Signalbits am Selektorausgang ein speicherplatzabhängiges Signalwort ausgegeben werden, und an die Stelle der einfachen Summenbildung können komplexere Operationen treten, beispielsweise eine exponentielle Gewichtung der einzelnen Signalbits oder -worte. Im Rahmen der fachmännischen Umsetzung dieses Prinzips liegen die Schranken in der benötigten Logik (Raumbedarf, Verlustleistung usw.) und der zur Verfügung stehenden Zeit für die Berechnung.

Von besonderen Anwendungen abgesehen wird die Charakteristik der Leerzellen kaum interessieren, jedenfalls nicht für das Policing. Wird üblicherweise ein Messwert m(aⱼ) für die individuelle Verbindung j der zuletzt eingetroffenen Zelle ermittelt und ist diese Zelle eine Leerzelle, so kann die Ermittlung von m(aⱼ) entfallen.

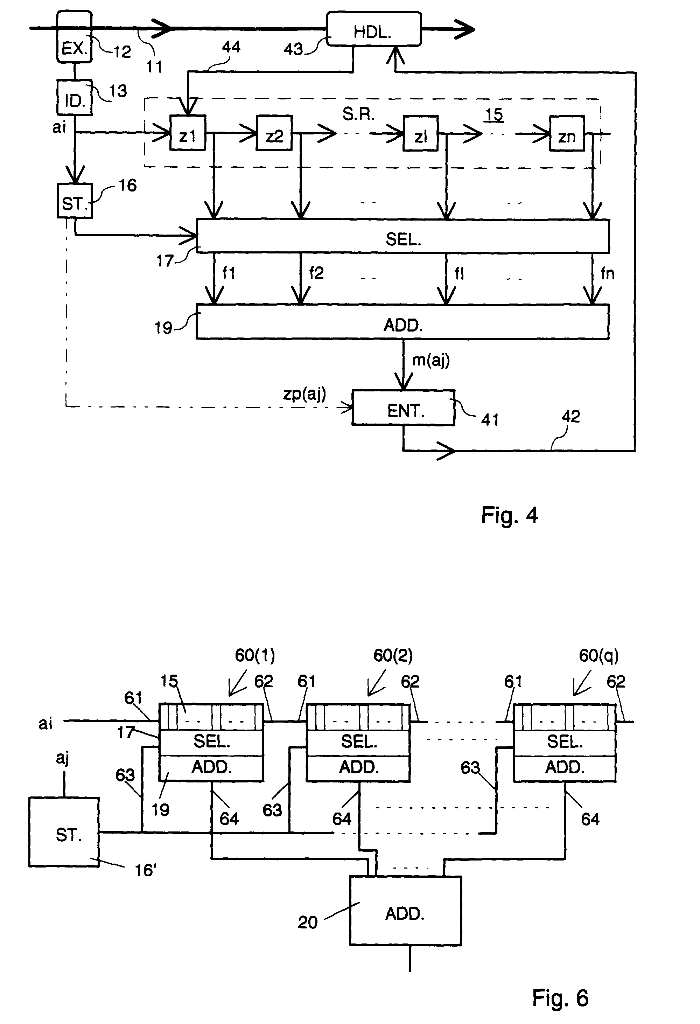

Die Vorrichtung gemäss Figur 1 wird mit Vorteil in integrierter Bauweise realisiert, wobei Schieberegister 15, Selektor 17 und Addierer 19 ein Modul 60 bilden. Das Modul 60 weist lediglich folgende Ein- und Ausgänge auf: einen Dateneingang 61 für die Identifikationsangabe aᵢ an das Schieberegister 15, einen Datenausgang 62 aus dem Schieberegister 15, einen Steuereingang 63 an den Selektor 17 und einen Ausgang 64 aus dem Addierer 19. Es lässt sich dann in einfacher Weise kaskadieren, um zu längeren Fenstern zu kommen, wie dies die Figur 6 zeigt. Die Schieberegister 15 von zum Beispiel q Moduln 60(1) bis 60(q) kommen hintereinander zu liegen und bilden so ein langes Schieberegister. Die Steuerschaltung 16, mit den vorgebbaren Grenzwerten eingerichtet auf die q-fache Länge eines einfachen Moduls 60, versorgt alle q Selektoren 17 parallel mit Steuersignalen. Die q Ausgänge der Addierer 19 werden auf einen zusätzlichen Addierer 20 geführt, der als Resultat die Summe der q Teilergebnisse bildet.

Eine Erhöhung der Verarbeitungsgeschwindigkeit lässt sich durch Parallelisierung erreichen. Der aufwendigere Teil der Vorrichtung, das Schieberegister 15, steht dabei in einfacher Ausführung im Zentrum. Steuerschaltung 16, Selektor 17 und Addierer 19 hingegen sind r-fach vorhanden. Die Ausgänge der Schieberegisterstufen (z) sind je mit allen r Selektoren 17 verbunden. Jede der r Gruppen bestehend aus je einer Steuerschaltung 16, einem Selektor 17 und einem Addierer 19 arbeitet unabhängig. Die jeweilige Steuerschaltung bestimmt, welche Identifikationsangabe aⱼ und welches Fenster verarbeitet wird. Somit können gleichzeitig r verschiedene Anzahlen m(aⱼ) ermittelt werden. Der vielen Verbindungen zwischen Schieberegister und Selektoren wegen ist eine Realisierung als integrierte Schaltung angezeigt.

Eine derartige Parallelisierung ist auch für die allgemeinere Ausführungsform möglich, in welcher der Addierer durch einen programmierbaren Funktionsblock ersetzt ist. Die Figur 5 zeigt schematisch eine solche parallelisierte Anordnung. Der Extraktor (EX.) 12 am Zellenstrom 11, der Identifikationsumsetzer (ID.) 13 und das Schieberegister (S.R.) 15 sind gegenüber der Variante von Figur 1 unverändert. Die Schieberegister-Ausgänge sind mit r Selektoren 17 verbunden, die ihrerseits je mit einem Funktionsblock 5 verbunden sind. Eine einzelne Verbindung 8 leitet ein Signalwort wₗ vom Selektor 17 an den Funktionsblock 5. Die Operationen im Block, welche die Funktion bewerkstelligen, können fest gegeben oder vorgebbar sein. Die Steuerschaltung 16 ist ebenfalls r-fach vorhanden. Sie kann gegebenenfalls über die Programmierverbindung 9 die jeweilige Funktion festlegen.

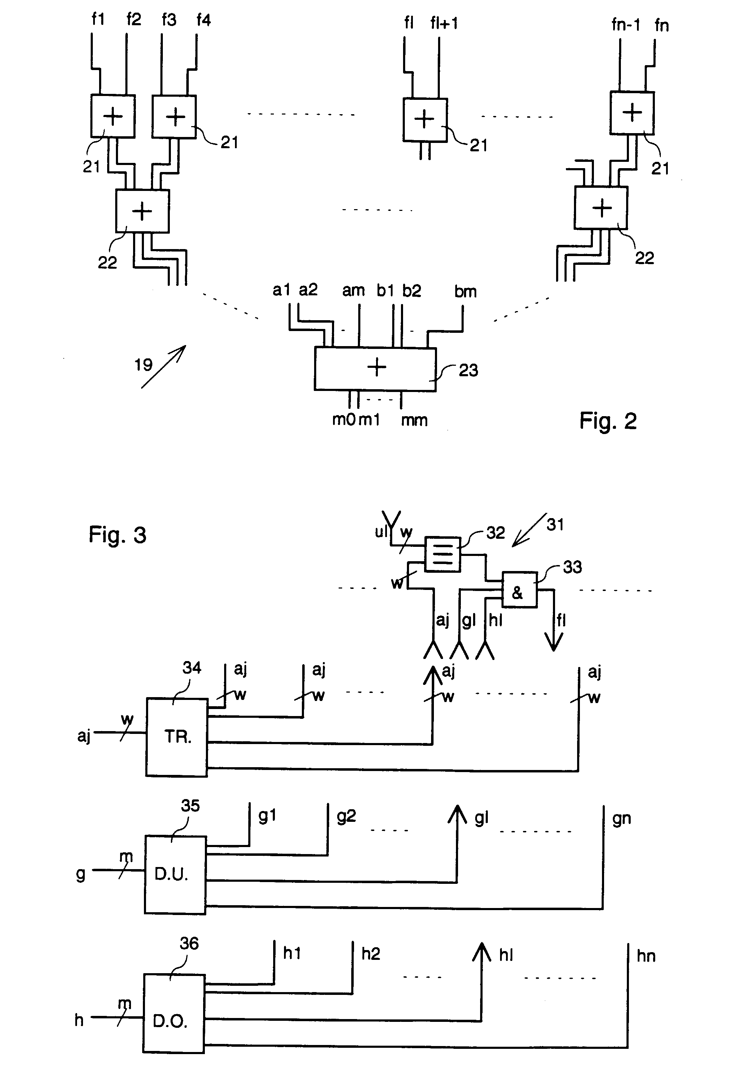

Die Figur 2 zeigt schematisch einen möglichen Aufbau eines Addierers 19 für bis zu n=2^{m} aus dem Selektor stammende Signalbits f₁ bis fₙ. Eine realistische Grösse für n ist etwa 4096 (m=12). Die Addition erfolgt über mehrere Stufen. Auf einer ersten Stufe werden in n/2 1-Bit-Addierern 21 je zwei Signalbits (f₁, f₂; f₃, f₄; ... fₙ₋₁, fₙ) zusammengezählt. Je zwei der zwei Bit umfassenden Zwischenresultate aus den 1-Bit-Addierern werden jeweils auf einem 2-Bit-Addierer 22 zusammengezählt, wovon n/4 benötigt werden. Die Zwischenresultate sind drei Bit breit. In Fortsetzung dieses Vorgehens gelangt man in der m-ten Stufe zum einzigen m-Bit-Addierer 23, der das m+1 Bit breite Resultat liefert. Diese kombinatorische Logik liefert das Resultat unmittelbar mit lediglich der Durchlaufzeit von ²log n Stufen. Für eine q-fache Kaskadierung werden für die Addition der q Resultate ²log q weitere Stufen der beschriebenen Art eines Addierers benötigt. Funktionsblöcke 5, die in der Lage sind, komplexere Operationen auszuführen, können nach demselben hierarchischen Prinzip aufgebaut sein.

Die Figur 3 zeigt ein Beispiel für einen Selektor 17 bzw. dessen wesentliche Bestandteile. Ein Vergleichselement 31 enthält einen Mehrfachvergleicher 32 und eine Maskierungsstufe 33 und ist n-fach vorhanden. Gezeichnet ist das l-te Element. Ferner sind ein Treiber (TR.) 34, ein Decodierer für den unteren Grenzwert (D.U.) 35 und ein Decodierer für den oberen Grenzwert (D.O.) 36 des Speicherbereichs vorhanden, mit je einem mit der Steuerschaltung 16 verbundenen Eingang und je n Ausgängen, die einzeln mit den n Vergleichselementen 31 verbunden sind.

Der Treiber 34 vervielfacht die am Eingang anstehende, von der Steuerschaltung vorgegebene Identifikationsangabe aⱼ, ein w Bit breites Wort, und gibt dieses identisch an jedes Vergleichselement 31, genauer dessen Mehrfachvergleicher 32, weiter. Der Inhalt uₗ der l-ten Stufe des Schieberegisters 15, ebenfalls ein Wort der Breite w, ist mit dem anderen Eingang des l-ten Mehrfachvergleichers 32 verbunden. Das Signal am Ausgang des Mehrfachvergleichers 32 ist 1, wenn die beiden Worte übereinstimmen, andernfalls ist es 0. Es wird an den ersten der drei Eingänge der Maskierungsstufe 33 geleitet, die aus einem einfachen UND-Tor besteht. Der zweite Eingang der l-ten Maskierungsstufe 33 ist mit dem l-ten Ausgang gₗ des Decodierers für den unteren Grenzwert des Speicherbereichs 35 verbunden, der dritte mit dem l-ten Ausgang hₗ des Decodierers für den oberen Grenzwert 36. Der untere Grenzwert g wird als m Bit breites Wort von der Steuerschaltung 16 an den Eingang des Decodierers für den unteren Grenzwert 35 gelegt; er hat einen Wert zwischen 0 und n-1. Der Decodierer bewirkt, dass an den g Ausgängen g₁ bis g_{g} eine 0 ausgegeben wird, an den n-g Ausgängen g_{g+1} bis gₙ eine 1. Der wohl häufigste Fall mit g=0, also ohne eine wirksame untere Grenze, setzt alle Ausgänge auf 1, so dass von unten keine Maskierung stattfindet, also das Schieberegister vom jüngsten Eintrag her abgefragt wird. Für den oberen Grenzwert h+1, wobei h einen Wert zwischen 0 und n-1 hat, sind die Verhältnisse im Prinzip dieselben, jedoch werden die h+1 Ausgänge h₁ bis hₕ₊₁ auf 1, die restlichen auf 0 gesetzt. Der Fall h=n-1 setzt alle Ausgänge auf 1, so dass von oben keine Maskierung stattfindet, also bis zur vollen Schieberegisterlänge, das heisst bis zum ältesten Eintrag abgefragt wird. Nur wenn die Signale am zweiten und dritten Eingang der Maskierungsstufe 33 eins sind, gelangt das Ausgangssignal des Mehrfachvergleichers 32 an den Selektorausgang. Das Signalbit fₗ des Selektorausgangs ist also immer 0, ausser wenn die Stufe 1 im abgefragten Speicherbereich liegt und der Vergleich zwischen aⱼ und uₗ Uebereinstimmung zeigt. Die Anzahl h+1-g=k der ausgewerteten Speichereinträge ist also wählbar. Für den Fall einer komplexeren Ausgestaltung der Vorrichtung kann die Maskierungsstufe 33 erweitert werden und statt des Signalbits fₗ ein Signalwort wₗ abgeben, das beispielsweise von der Stellung des Speicherplatzes und der momentanen Länge k abhängt.

Die Decodierer lassen sich in analoger Weise zum Addierer realisieren, hier jedoch mit umgekehrtem Baum; ein m Bit breites Wort wird über m = ²log n Stufen in die 1-Bit-Signale an den Ausgängen aufgelöst.

Das Verfahren eignet sich insbesondere für die Kontrolle eines Zellenstroms auf die Einhaltung der - üblicherweise bei der Verbindungsaufnahme - individuell vereinbarten Verkehrsparameter. Die flexible Gestaltung (Fensterbreite, allfällige Verzögerung, Mehrfacherfassung) erlaubt es, verschiedene Parameter zu vereinbaren und zu überwachen. Für einen Entscheid darüber, ob eine bestimmte Zelle zu markieren oder aus dem Zellenstrom auszuscheiden sei, kann auf einen oder mehrere Messwerte abgestellt werden. Der Entscheid berücksichtigt dabei einen oder mehrere Werte zₚ(aⱼ). Diese Werte sind im Zusammenhang mit dem zu beurteilenden Verkehrsparameter zu sehen. Sollen zum Beispiel, basierend auf über verschiedene Fensterlängen gemessene Anzahlen m(aⱼ), Mittelwerte von Zellenraten zueinander in Beziehung gesetzt werden, so muss der Wert zₚ(aⱼ) die jeweilige Fensterlänge berücksichtigen; er kann aber auch eine Gewichtung enthalten.

Die Figur 4 zeigt eine Vorrichtung zur Durchführung einer Kontrolle des Zellenstroms unter Verwendung der vorgängig erläuterten Vorrichtung nach Figur 1. Das Messresultat, das ist die Anzahl m(aⱼ) selektierter Speicherplätze, wird einem Entscheider (ENT.) 41 zugeführt, dem ferner der Wert zₚ(aⱼ) zur Verfügung steht. Dieser Bezugswert kann vom übrigen System (nicht gezeichnet) vorgegeben sein - im einfachsten Fall als feste Grösse - kann aber auch von der Steuerschaltung 16 stammen. Letzteres ist vor allem dann sinnvoll, wenn die Steuerschaltung 16 innerhalb eines Zellzyklus mehrere Messungen mit verschiedenen Randbedingungen auslöst, denen dann auch je eine zugehörige Bezugsgrösse beigegeben wird. Das Resultat der Entscheidung-Durchlassen, Markieren oder Zurückweisen der Zelle - wird über eine Leitung 42 an eine Zellenbehandlungsschaltung (HDL.) 43 weitergegeben. Der Zellenstrom 11 wird durch diese Schaltung 43 geführt, im wesentlichen ein Puffer, der die Zelle bis zum Eintreffen eines Entscheids, in der Regel längstens während einer Zykluszeit, verfügbar hält. Eine weitere Steuerleitung 44 führt von der Zellenbehandlungsschaltung 43 zur ersten Stufe (z1) des Schieberegisters 15. Im Falle des Zurückweisens einer Zelle, in dessen Folge eine Leerzelle in den Zellenstrom eingefügt wird, kann über diese Verbindung der Eintrag im Schieberegister 15 mit den tatsächlichen Verhältnissen im Zellenstrom in Uebereinstimmung gebracht werden.

Die Anwendung des Verfahrens zur Messung charakteristischer Grössen in einem Zellenstrom für andere Aufgaben als Policing und Shaping sowie die Verwendung beschriebener oder gleichwertiger Vorrichtungen zur Ausübung des Verfahrens ist dem Fachmann in Kenntnis der vorliegenden Erfindung ohne Schwierigkeiten einsichtig.

## Patentansprüche

1. Verfahren zur Messung charakteristischer Grössen eines Stroms von Datenpaketen fester Länge in einem digitalen Uebertragungssystem, wobei jedes Datenpaket fester Länge - im folgenden Zelle genannt - das zum Zellenstrom beiträgt, eine Information über die individuelle Verbindung enthält, der die Zelle zugeordnet ist, dadurch gekennzeichnet, dass laufend von einer festen Anzahl n der zuletzt eingetroffenen Zellen je eine Identifikationsangabe aᵢ der individuellen Verbindung i, der die Zelle zugeordnet ist, gespeichert wird, und dass bis spätestens zum Eintreffen einer nächsten Zelle für mindestens eine individuelle Verbindung j mindestens einmal von einer jeweils wählbaren Anzahl k der n Speichereinträge selektiv für die Speichereinträge, welche die Identifikationsangabe aj aufweisen, in gegebener oder vorgebbarer Funktion derer Plätze im Speicher ein Ergebnis m(aⱼ) ermittelt wird, wobei die Ermittlung des Ergebnisses m(aⱼ) entfallen kann, wenn die Identifikationsangabe aⱼ sich auf eine Leerzelle bezieht.

2. Verfahren nach Anspruch 1, dadurch gekennzeichnet, dass jedem Platz im Speicher ein Gewicht zugeordnet und als Ergebnis m(aj) eine gewichtete Summe ermittelt wird.

3. Verfahren nach Anspruch 1, dadurch gekennzeichnet, dass als Ergebnis m(aⱼ) die Anzahl der selektierten Speichereinträge ermittelt wird.

4. Verfahren nach Anspruch 1, dadurch gekennzeichnet, dass die Ermittlung des mindestens einen Ergebnisses m(aj) für jene Speichereinträge erfolgt, welche die zur zuletzt eingetroffenen Zelle gehörige Identifikationsangabe aⱼ aufweisen.

5. Anwendung des Verfahrens nach Anspruch 4 zur Kontrolle eines Zellenstroms auf die Einhaltung individuell vereinbarter Verkehrsparameter, wobei ein Entscheidungsprozess auf das mindestens eine gemessene Ergebnis m(aⱼ) und mindestens einen Wert zₚ(aⱼ), abstellt und Zellen, welche gemäss Ergebnis des Entscheidungsprozesses die Vereinbarung für ihre individuelle Verbindung nicht einhalten, markiert oder aus dem Zellenstrom ausscheidet.

6. Anwendung nach Anspruch 5, dadurch gekennzeichnet, dass der Speichereintrag für eine Zelle, die ausgeschieden wird, mit einem Speichereintrag für eine Leerzelle überschrieben wird.

7. Vorrichtung zur Durchführung des Verfahrens nach Anspruch 1, mit einem Identifikationsumsetzer (13), der aus einer ankommenden Zelle die individuelle Verbindung i identifiziert und in eine lokale Identifikationsangabe aᵢ umsetzt, gekennzeichnet durch ein Schieberegister (15), das die Identifikationsangabe aᵢ im Takt der ankommenden Zellen speichert, eine Steuerschaltung (16), die für die jeweils identifizierte individuelle Verbindung j die zu verarbeitenden Speichereinträge bestimmt, einen damit verbundenen Selektor (17), der die zu verarbeitenden Speichereinträge auf deren Uebereinstimmung mit der jeweiligen Identifikationsangabe aⱼ überprüft und bei Uebereinstimmung ein Signalwort setzt, und einen Funktionsblock (5, 19), dessen Eingänge mit den Signalwort-Ausgänge des Selektors (17) verbunden sind, und der ein Ergebnis m(aⱼ) berechnet.

8. Vorrichtung nach Anspruch 7, dadurch gekennzeichnet, dass das Signalwort des Selektors (17) ein einzelnes Signalbit (f₁, f₂,... fₙ) und der Funktionsblock (5) ein Addierer (19) ist.

9. Vorrichtung nach Anspruch 8 in kaskadierter Ausführung, dadurch gekennzeichnet, dass Schieberegister (15), Selektor (17) und Addierer (19) q-fach vorhanden sind, wobei die q Schieberegister (15) in Serie geschaltet, die q Addierer (19) durch einen weiteren Addierer 20, der als Resultat m(aⱼ) die Summe der q Ergebnisse bildet, ergänzt und alle q Selektoren (17) an die Steuerschaltung (16) angeschlossen sind.

10. Vorrichtung nach Anspruch 7 in paralleler Ausführung, dadurch gekennzeichnet, dass Steuerschaltung (16), Selektor (17) und Funktionsblock (5) r-fach vorhanden sind, wobei jede der r Steuerschaltungen (16) für eine jeweils identifizierte individuelle Verbindung j individuell die zu verarbeitenden Speichereinträge bestimmt, so dass r individuelle Ergebnisse m(aⱼ) resultieren.

11. Vorrichtung zur Kontrolle eines Zellenstroms auf die Einhaltung individuell vereinbarter Verkehrsparameter, die Zellen, welche gemäss Ergebnis eines Entscheidungsprozesses die Vereinbarung für ihre individuelle Verbindung nicht einhalten, markiert oder aus dem Zellenstrom ausscheidet, mit einer Vorrichtung nach Anspruch 7 und einem dem Funktionsblock (5) nachgeschalteten Entscheider (41), der den Entscheidungsprozess durchführt.

12. Vorrichtung nach Anspruch 11, dadurch gekennzeichnet, dass die Steuerschaltung (16) mit dem Entscheider (41) verbunden ist und mindestens einen Wert zₚ(aⱼ) an diesen weitergibt.

## Claims

1. A method for measuring characteristic parameters of a flow of fixed length data packets in a digital transmission system, whereby each fixed length data packet - such data packet in the following being referred to as a cell - adding to the cell flow contains information about the individual connection to which the cell is allocated, characterised in that continuously from a fixed number n of the most recently arrived cells an identification statement aᵢ of the individual connection i to which the cell is allocated is stored in memory, and that at the latest until arrival of a next cell for at least one individual connection j at least once out of a selectable number k of the n memory entries, selectively for the memory entries having the identification statement aⱼ, in a given or presettable function of their locations in the memory a result m(aⱼ) is determined, whereby determination of the result m(aⱼ) can be done without if the identification statement aⱼ refers to an empty cell.

2. A method according to claim 1, characterised in that each location in the memory is weighted and as a result m(aⱼ) a weighted sum is determined.

3. A method according to claim 1, characterised in that as a result m(aⱼ) the number of selected memory entries is determined.

4. A method according to claim 1, characterised in that determination of at least the one result m(aⱼ) takes place for those memory entries which have an identification statement aⱼ belonging to the most recently arrived cell.

5. An application of the method according to claim 4 for controlling a cell stream for adherence to individually agreed transmission parameters, whereby a decision process is based on at least the one measured result m(aⱼ) and at least one value zₚ(aⱼ), and marks or eliminates cells which according to the result of the decision process do not adhere to the agreement regarding their individual connection.

6. An application according to claim 5, characterised in that the memory entry for a cell which is eliminated is overwritten with a memory entry for an empty cell.

7. A device for implementing the method according to claim 1, with an identification converter (13) which identifies the individual connection i from the incoming cell and translates it into a local identification statement aᵢ, characterised by a shift register (15) which stores the identification statement aᵢ at the clock of the incoming cells, a control circuit (16) which, for the respectively identified individual connection j determines the memory entries to be processed, linked to it a selector (17) which checks the memory entries to be processed for agreement with the respective identification statement aⱼ and in the case of agreement places a signal word, and a functioning block (5, 19) the entries of which are connected to the signal word exits of the selector (17) and which calculates a result m(aⱼ).

8. A device according to claim 7, characterised in that the signal word of the selector (17) is a single flag bit (f₁, f₂, ... fₙ) and the functional block (5) is an adder (19).

9. A device according to claim 8 in a cascaded design, characterised in that the shift register (15), selector (17) and adder (19) exist q-fold, whereby the q shift registers (15) are connected in series, the q adders (19) are supplemented by a further adder (20) which forms the sum of the q results into a result m(aⱼ), and whereby all q selectors (17) are connected to the control circuit (16).

10. A device according to claim 7 in a parallel design, characterised in that the control circuit (16), selector (17) and functional block (5) exist r-fold, whereby each of the r control circuits (16) for each respective identified individual connection j, individually determines the memory entries to be processed, so that r individual results m(aⱼ) result.

11. A device for controlling a cell flow for adherence to individually agreed transmission parameters, which marks or eliminates from the cell flow any cells which according to the result of a decision process do not adhere to the agreement concerning their individual connection, with a device according to claim 7 and a decider (41) topped to the functional block (5), the decider (41) carrying out the decision process.

12. A device according to claim 11, characterised in that the control circuit (16) is connected to the decider (41) and hands on at least one value zₚ(aⱼ) to this decider (41).

## Revendications

1. Procédé pour mesurer des grandeurs caractéristiques d'un flux de paquets de données de longueur fixe dans un système numérique de transmission, selon lequel chaque paquet de données de longueur fixe - appelé élément ci-après - contribuant au flux d'éléments contient une information sur la connexion individuelle à laquelle l'élément est affecté, caractérisé en ce qu'on mémorise en continu pour chaque quantité fixe n des derniers éléments arrivés une indication aᵢ d'identification de la connexion individuelle j à laquelle l'élément est affecté, et en ce que, jusqu'à l'arrivée d'un prochain élément au plus tard et pour au moins une connexion individuelle j, un résultat m(aⱼ) est calculé au moins une fois à partir d'une quantité k sélectionnable des n enregistrements en mémoire, de manière sélective pour les enregistrements en mémoire présentant l'indication d'identification aⱼ et en fonction définie ou définissable de la place qu'occupent ceux-ci dans la mémoire, le calcul du résultat m(aⱼ) pouvant être supprimé lorsque l'indication d'identification aⱼ correspond à un élément nul.

2. Procédé selon la revendication 1 caractérisé en ce qu'un poids est affecté à chaque place de la mémoire et en ce que le résultat m(aⱼ) calculé est une somme pondérée.

3. Procédé selon la revendication 1 caractérisé en ce que le résultat m(aⱼ) calculé est la quantité des enregistrements en mémoire sélectionnés.

4. Procédé selon la revendication 1 caractérisé en ce qu'au moins un résultat m(aⱼ) est calculé pour les enregistrements en mémoire présentant l'indication d'identification aⱼ associée à l'élément arrivé en dernier.

5. Application du procédé selon la revendication 4 pour contrôler si un flux d'élément respecte des paramètres de trafic convenus de façon individuelle, dans laquelle un processus de décision se base sur le au moins un résultat m(aⱼ) mesuré et à au moins une valeur zₚ(aⱼ) et marque ou élimine du flux d'éléments ceux qui, selon le résultat du processus de décision, ne satisfont pas à la convention pour leur connexion individuelle.

6. Application selon la revendication 5 caractérisée en ce que l'enregistrement en mémoire correspondant à un élément éliminé est recouvert par un enregistrement correspondant à un élément nul.

7. Dispositif pour la réalisation du procédé selon la revendication 1, avec un convertisseur d'identification (13), lequel identifie la connexion individuelle i à partir d'un élément arrivant et convertit celle-ci en une indication d'identification aᵢ locale, caractérisé par un enregistreur à décalage (15), lequel enregistre l'indication d'identification aᵢ au rythme des éléments arrivant, un circuit de commande (16), lequel détermine les enregistrements en mémoire à traiter pour chaque connexion j individuelle identifiée, un sélecteur (17) y étant relié, lequel vérifie que les enregistrements en mémoire concordent bien avec leur indication d'identification aⱼ respective et positionne un mot signalétique lorsqu'il y a correspondance, et un bloc fonctionnel (5, 19), dont les entrées sont reliées aux sorties de mot signalétique du sélecteur (17), et qui calcule un résultat m(aⱼ).

8. Dispositif selon la revendication 7 caractérisé en ce que le mot signalétique du sélecteur (17) est un bit unique de signal (f₁, f₂, ... fₙ) et en ce que le bloc fonctionnel (5) est un additionneur (19).

9. Dispositif selon la revendication 8 réalisé en cascade, caractérisé en ce que l'enregistreur à décalage (15), le sélecteur (17) et l'additionneur (19) sont présents q fois, les q enregistreurs à décalage (15) étant montés en série, les q additionneurs (19) étant complétés par un additionneur supplémentaire (20), lequel donne la somme des q résultats comme résultat m(aⱼ) et tous les q sélecteurs (17) étant reliés au circuit de commande (16).

10. Dispositif selon la revendication 7 réalisé en parallèle, caractérisé en ce que le circuit de commande (16), le sélecteur (17) et le bloc fonctionnel (5) sont présents r fois, chaque circuit de commande (16) déterminant de façon individuelle les enregistrements en mémoire à traiter pour une connexion j individuelle identifiée de manière à obtenir r résultats m(aⱼ) individuels.

11. Dispositif pour contrôler si un flux d'élément respecte des paramètres de trafic convenus de façon individuelle, lequel marque ou élimine du flux d'éléments ceux qui, selon le résultat du processus de décision, ne satisfont pas à la convention pour leur connexion individuelle, avec un dispositif selon la revendication 7 et un circuit de décision (41) placé en aval du bloc fonctionnel (5) et destiné à l'exécution du processus de décision.

12. Dispositif selon la revendication 11 caractérisé en ce que le circuit de commande (16) est relié au circuit de décision (41) et transmet à celui-ci au moins une valeur zₚ(aⱼ).
